# EUROPÄISCHE PATENTANMELDUNG

(11) **EP 4 249 306 A1**
(43) Veröffentlichungstag der Anmeldung: **27.09.2023**
(21) Anmeldenummer: 23152606.2
(22) Anmeldetag: 20.01.2023
(51) Int. Cl.: B60K 35/00, B60K 37/06, G09F 13/04, G09F 13/06, G09F 13/08, G09F 13/10

(54) **VERFAHREN ZUR HERSTELLUNG EINES BEDIENELEMENTS MIT TRANSPARENTER, HAUBENFÖRMIGER, EINE LEUCHTFLÄCHE ÜBERDECKENDER BLENDE UND ZUGEHÖRIGES BEDIENELEMENT**

(30) Priorität: 23.03.2022 DE 102022106871
(71) Anmelder: Preh GmbH, 97616 Bad Neustadt a.d. Saale (DE)
(72) Erfinder: SÜNNEMANN, Martin, 97633 Höchheim (DE); FRITZ, Kevin, 98617 Meiningen (DE); Fritz, Daniel, 98617 Neubrunn (DE)
(74) Vertreter: Lohmanns, Bernard

(57) **Zusammenfassung**

Die Erfindung betrifft ein Bedienelement (1), aufweisend: einen Träger (4) aus einem transluzenten oder transparenten ersten Thermoplast; eine opake Schicht (4a), bevorzugt opake Lackschicht, die bereichsweise auf einer Oberfläche des Trägers (4) aufgebracht ist, um durch einen transluzenten, bevorzugt unbeschichteten, Teilbereich der Oberfläche eine Leuchtfläche (4b) bei Einkopplung von Licht in den Träger (4) vorzugeben; wobei die opake Schicht (4a) und die Leuchtfläche (4b) bei bestimmungsgemäßer Anbringung des Bedienelements (1) eine dem Betrachter zugewandte, gemeinsame Sichtfläche (4c) vorgeben; eine die Sichtfläche (4c) übergreifende, haubenförmige Blende (2) aus einem transparenten zweiten Thermoplast, so dass die Sichtfläche (4c) durch die Blende (2) sichtbar ist und auf ihrer der Sichtfläche (4c) abgewandten Seite eine äußere Berührfläche (2b) ausbildet; ein stoffschlüssig mit der haubenförmigen Blende (2) verbundener, die haubenförmige Blende (2) aufnehmender Rahmen (3) aus einem opaken dritten Thermoplast; wobei der Rahmen (3) am Träger (4) stoffschlüssig festgelegt ist; sowie ein zugehöriges Herstellungsverfahren.

## Beschreibung

Die Erfindung betrifft ein Verfahren zur Herstellung eines Bedienelements mit einer transparenten, haubenförmigen Blende, welche zur Überdeckung einer Leuchtfläche ausgebildet ist. Das Bedienelement dient beispielsweise der Vornahme einer durch Berühren oder Betätigen erfolgenden Bedieneingabe des Bedienelements, um im Rahmen einer Mensch-Maschine-Schnittstelle die Schaltzustände oder Funktionszustände einer Kraftfahrzeugkomponente zu ändern. Das Bedienelement ist beispielsweise drehgelenkig, kippbeweglich oder Dergleichen an einem Fuß gelagert, der der Festlegung des Bedienelements am Kraftfahrzeug, insbesondere dem Armaturenbrett, der Mittelkonsole oder der Türverkleidung dient. Glas- oder glasähnliche Oberflächen sind derzeit sehr beliebt, da sie dem Bediener einen wertigen Eindruck der Mensch-Maschine-Schnittstelle vermitteln. Glas als Werkstoff stellt jedoch meist ein Verletzungsrisiko dar und kommt aufgrund der aufwändigen Herstellung und aufgrund seines vergleichsweise hohen Gewichts selten in Frage. Werden derartige Glasoberflächen durch thermische Formgebungsverfahren beispielsweise Überspritzen eines Trägers mit einem transparenten Kunststoff hergestellt, stellt die dabei wirkende thermische Belastung des Trägers und der transparenten Beschichtung als auch das Erstarrungsverhalten ein Problem für die Maßhaltigkeit des so hergestellten Bedienelements aber auch für dessen Dauerhaltbarkeit dar, insbesondere wenn in der Verwendung das Bedienelement starken Temperaturschwankungen, wie es regelmäßig im Kraftfahrzeug der Fall ist, und mechanischen Belastungen, wie sie bei der Betätigung auftreten, ausgesetzt ist. Dabei kann es zu optisch unattraktiven Ablösevorgängen kommen, die insbesondere an Übergangsstellen, wie dem Übergang zur Leuchtfläche auftreten. Auch andere Lösungen, wie durch Folienhinterspritzen hergestellte Bedienelemente weisen Ablöseprobleme insbesondere am Randbereich der Folie auf.

Vor diesem Hintergrund bestand Bedarf nach einer Lösung für ein Verfahren zur Herstellung eines optisch attraktiven aber gleichzeitig haltbareren Bedienelements mit transparenter, haubenförmiger, eine Leuchtfläche überdeckender Blende. Diese Aufgabe wird durch ein Verfahren gemäß Anspruch 1 gelöst. Eine gleichermaßen vorteilhafte Verwendung sowie ein Bedienelement sind jeweils Gegenstand eines nebengeordneten Anspruchs. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft ein Verfahren zur Herstellung einer Dekorblende mit den folgenden Schritten. In einem erfindungsgemäß vorgesehenen thermischen Formgebungsschritt erfolgt ein thermisches Formen eines Trägers aus einem transluzenten oder transparenten ersten Thermoplast. In einem zeitgleichen, bevorzugt zeitlich nachgeschalteten Schritt erfolgt ein bereichsweises Beschichten einer Oberfläche des Trägers mit einer opaken Schicht, so dass ein transluzenter, bevorzugt unbeschichteter, Teilbereich der Oberfläche eine Leuchtfläche bei Einkopplung von Licht in den Träger verbleibt, und die opake Schicht und die Leuchtfläche bei bestimmungsgemäßer Anbringung des Bedienelements eine dem Betrachter zugewandte, gemeinsame Sichtfläche vorgeben. Die opake Schicht ist beispielsweise eine Lackschicht, die in einem Druck- oder Sprühbeschichtungsverfahren auf die Oberfläche bereichsweise aufgebracht wird. Die Beschichtung kann auch großflächig oder vollflächig erfolgen, wobei in einem nachfolgenden Ablationsschritt die opake Schicht, bzw. die Lackschicht, zur Erzeugung der Leuchtfläche entfernt wird, beispielsweise mittels Laserablation.

In einem weiteren thermischen Formgebungsschritt erfolgt ein thermisches Formen einer haubenförmigen Blende aus einem transparenten zweiten Thermoplast. In einem weiteren oder während des vorgenannten thermischen Formgebungsschritt erfolgt ein thermisches Formen eines Rahmens aus einem opaken dritten Thermoplast. Nachfolgend oder während des vorgenannten thermischen Formgebungsschritt erfolgt in einem Fügeschritt ein stoffschlüssiges Verbinden der Blende mit dem Rahmen, so dass die Blende in dem Rahmen aufgenommen ist. Bevorzugt werden die vorgenannten Schritte in einem Mehrkomponenten-Spritzgießschritt zusammengeführt, indem beispielsweise die Schritte mittels eines zumindest gemeinsamen formgebenden Werkzeugs oder zumindest eines gemeinsamen formgebenden Werkzeugteils ausgeführt werden.

Nachfolgend erfolgt in einem Fügeschritt ein stoffschlüssiges Verbinden des Rahmens mit dem Träger, so dass die haubenförmige Blende die Sichtfläche übergreifend angeordnet ist und die Sichtfläche durch die Blende sichtbar ist und auf ihrer, der Sichtfläche abgewandten Seite eine äußere Berührfläche ausbildet. Bevorzugt erfolgt das stoffschlüssige Verbinden des Rahmens mit dem Träger durch Ultraschallverschweißen. Durch die erfindungsgemäße Herstellung des Bedienelements wird erreicht, dass die haubenförmige Blende ausschließlich über den Rahmen am Träger aufliegt. Aufgrund der beabstandeten Anordnung oder der lediglich im losen Berührkontakt stehenden relativen Anordnung von Träger und haubenförmiger Blende kommt es nicht zu einer Beeinträchtigung der Sichtfläche. Optisch nachteilige Ablöseerscheinungen bei transparent überspritzten Sichtflächen sind nicht zu beobachten. Darüber hinaus kann die gestalterische Auslegung der haubenförmige Blende nahezu beliebig ausfallen, da Schrumpfungsprozesse durch Abkühlprozesse sich nicht auf eine ansonsten vorgesehene Verbindung der Blende zum Träger auswirken. Dadurch wird der gestalterische Freiheitsgrad erhöht und insbesondere die Möglichkeit geschaffen, eine einen Glaswerkstoff imitierende Gestaltung der haubenförmigen Blende zu wählen, die sich insbesondere durch eine vergleichsweise hohe Materialstärke und/oder Oberflächenkonturen mit in geradlinigen Kanten auszeichnen. Bevorzugt weist daher nach dem stoffschlüssigen Verbinden des Rahmens mit dem Träger die haubenförmige Blende zumindest in ihrem Bereich über der Sichtfläche eine Dicke von mindestens 1,5 mm auf.

Bevorzugt ist eine umlaufende, im dem jeweils für den gemeinsamen Berührkontakt vorgesehenen Bereich zwischen dem Rahmen und Träger angeordnete Erhebung als Energierichtungsgeber für das Ultraschallverschweißen vorgesehen.

Bevorzugt ist die haubenförmige Blende nach dem stoffschlüssigen Verbinden des Rahmens mit dem Träger derart angeordnet, dass zwischen der haubenförmigen Blende und der opaken Schicht ein Luftspalt angeordnet ist, um dauerhaft eine Beschädigung der opaken Schicht auszuschließen.

Bevorzugt weist zumindest nach dem Formen des Rahmens der Rahmen eine Materialstärke auf, die 3,0 mm, bevorzugter 2,0 mm, nicht überschreitet.

Bevorzugt bildet nach dem Formen die haubenförmige Blende eine haptisch merkbare Aufwölbung der Berührfläche aus, wobei nach dem stoffschlüssigen Verbinden des Rahmens mit dem Träger die Aufwölbung einen Hohlraum übergreift, der zwischen der haubenförmigen Blende und der Sichtfläche angeordnet ist.

In einer bevorzugten Ausgestaltung ist der Träger mehrteilig ausgebildet ist und es wird ferner in dem Träger ein Lichtleiter angeordnet, so dass dieser im Träger aufgenommen ist, um Licht einer Lichtquelle in den Träger einzukoppeln.

In einer weiteren Ausgestaltung des Verfahrens erfolgt ein Beschichten einer weiteren Oberfläche des Trägers mit einer weiteren opaken Schicht, so dass ein transluzenter, bevorzugt unbeschichteter, Teilbereich der weiteren Oberfläche eine weitere Leuchtfläche bei Einkopplung von Licht in den Träger vorgibt, wobei die so erzeugten Leuchtflächen sich beispielsweise bezüglich des Trägers diametral gegenüberliegen, so dass die weitere opake Schicht und die weitere Leuchtfläche bei bestimmungsgemäßer Anbringung des Bedienelements eine dem Betrachter zugewandte, weitere gemeinsame Sichtfläche vorgeben, so dass die Sichtflächen beispielsweise auf gegenüberliegenden Seiten des Trägers angeordnet sind.

In einem thermischen Formschritt wird eine weitere haubenförmige Blende aus einem weiteren transparenten zweiten Thermoplast erzeugt, in demselben Formungsschritt oder einem weiteren thermischen Formschritt erfolgt ein thermisches Formen eines weiteren Rahmens aus einem weiteren opaken dritten Thermoplast. In einem separaten Schritt oder beim vorgenannten Formen erfolgt ein stoffschlüssiges Verbinden der weiteren Blende mit dem weiteren Rahmen, so dass die weitere Blende in dem weiteren Rahmen aufgenommen ist.

In einem weiteren Fügeschritt erfolgt ein stoffschlüssiges Verbinden des weiteren Rahmens mit dem Träger, so dass die weitere haubenförmige Blende die weitere Sichtfläche übergreifend angeordnet ist und die weitere Sichtfläche durch die weitere haubenförmige Blende sichtbar ist und auf ihrer, der weiteren Sichtfläche abgewandten Seite eine weitere äußere Berührfläche ausbildet. Bevorzugter erfolgt das Verbinden unter Verwendung von Ultraschall.

Bevorzugt ist vorgesehen, dass der vorgenannte Fügeschritt einen Schritt des stoffschlüssigen Verbindens des Rahmens mit dem weiteren Rahmen umfasst oder das unmittelbare Verbinden der Rahmen in einem separaten Schritt erfolgt. Dabei ist jedoch bevorzugt vorgesehen, dass diese über eine gesamte Länge ihres gemeinsamen Berührkontaktbereichs stoffschlüssig verbunden werden, um Streulichtaustritt aus dem Träger zu vermeiden.

Die Erfindung betrifft ferner ein Bedienelement, welches einen Träger aus einem transluzenten oder transparenten ersten Thermoplast aufweist. Ferner ist eine opake Schicht, bevorzugt opake Lackschicht, bereichsweise auf einer Oberfläche des Trägers aufgebracht, um durch einen transluzenten, bevorzugt unbeschichteten, Teilbereich der Oberfläche eine Leuchtfläche bei Einkopplung von Licht in den Träger vorzugeben. Die opake Schicht und die Leuchtfläche bilden bei bestimmungsgemäßer Anbringung des Bedienelements eine dem Betrachter zugewandte, gemeinsame Sichtfläche aus. Ferner ist eine die Sichtfläche übergreifende, haubenförmige Blende aus einem transparenten zweiten Thermoplast vorgesehen, so dass die Sichtfläche durch die Blende sichtbar ist und auf ihrer der Sichtfläche abgewandten Seite eine äußere Berührfläche ausbildet. Ein stoffschlüssig mit der Blende verbundener, die Blende aufnehmender Rahmen aus einem opaken dritten Thermoplast ist am Träger stoffschlüssig festgelegt. Bevorzugt ist die stoffschlüssige Verbindung durch Ultraschallverschweißen erfolgt. Durch die erfindungsgemäße Auslegung des Bedienelements wird erreicht, dass die haubenförmige Blende ausschließlich über den Rahmen am Träger aufliegt. Aufgrund der beabstandeten Anordnung oder der lediglich im losen Berührkontakt stehenden relativen Anordnung von Träger und haubenförmiger Blende kommt es nicht zu einer Beeinträchtigung der Sichtfläche. Optisch nachteilige Ablöseerscheinungen bei transparent überspritzten Sichtflächen sind nicht zu beobachten. Darüber hinaus kann die gestalterische Auslegung der haubenförmigen Blende nahezu beliebig ausfallen, da Schrumpfungsprozesse durch Abkühlprozesse sich nicht auf eine ansonsten vorgesehene Verbindung der Blende zum Träger beziehen. Dadurch wird der gestalterische Freiheitsgrad erhöht und insbesondere die Möglichkeit geschaffen, eine einen Glaswerkstoff imitierende Gestaltung zu wählen, die sich insbesondere durch eine vergleichsweise hohe Materialstärke und/oder Oberflächenkonturen mit in geradlinigen Kanten auszeichnen. Bevorzugt weist daher nach dem stoffschlüssigen Verbinden des Rahmens mit dem Träger die Blende zumindest über der Sichtfläche eine Dicke von mindestens 1,5 mm auf.

Bevorzugt ist die haubenförmige Blende derart ausgebildet, dass zwischen der haubenförmigen Blende und der opaken Schicht ein Luftspalt angeordnet ist, um dauerhaft eine Beschädigung der opaken Schicht auszuschließen.

Bevorzugt weist der Rahmen eine Materialstärke auf, die 3,0 mm, bevorzugter 2,0 mm, nicht überschreitet.

Bevorzugt bildet die haubenförmige Blende eine haptisch merkbare Aufwölbung der Berührfläche aus, wobei die Aufwölbung einen Hohlraum übergreift, der zwischen der haubenförmigen Blende und der Sichtfläche angeordnet ist.

Um das Austreten von Streulicht zu unterbinden, ist gemäß einer bevorzugten Ausgestaltung vorgesehen, dass der Bereich, in dem der Rahmen mit dem Träger stoffschlüssig verbunden ist, die Sichtfläche vollständig umschließt.

In einer bevorzugten Ausgestaltung ist der Träger mehrteilig ausgebildet ist und ist ferner in dem Träger ein Lichtleiter aufgenommen, um Licht einer Lichtquelle in den Träger einzukoppeln.

Gemäß einer bevorzugten Ausgestaltung weist das Bedienelement eine weitere opake Schicht auf, die bereichsweise auf einer weiteren Oberfläche des Trägers aufgebracht ist, um durch einen transluzenten, bevorzugt unbeschichteten, Teilbereich der weiteren Oberfläche eine weitere Leuchtfläche bei Einkopplung von Licht in den Träger vorzugeben. Dabei geben die weitere opake Schicht und die weitere Leuchtfläche bei bestimmungsgemäßer Anbringung des Trägers eine dem Betrachter zugewandte, weitere Sichtfläche vor. Ferner ist eine die weitere Sichtfläche übergreifende, weitere haubenförmige Blende aus einem transparenten Material vorgesehen, die so angeordnet ist, dass die weitere Sichtfläche durch die weitere haubenförmige Blende für den Betrachter sichtbar ist. Ein weiterer, stoffschlüssig mit der weiteren haubenförmigen Blende verbundener Rahmen aus einem weiteren dritten Thermoplast ist ferner am Träger stoffschlüssig festgelegt, beispielsweise durch Ultraschallverschweißen. Bevorzugt sind die Rahmen untereinander stoffschlüssig verbunden, bevorzugter über eine gesamte Länge ihres gemeinsamen Berührkontaktbereichs stoffschlüssig verbunden. Die Erfindung betrifft ferner die Verwendung des Bedienelements gemäß einer der bevorzugten Ausführungsformen in einem Kraftfahrzeug.

Die Erfindung wird anhand der nachfolgenden Figuren näher erläutert. Die Figuren sind dabei nur beispielhaft zu verstehen und stellen lediglich bevorzugte Ausführungsvarianten dar. Es zeigen:
- Fig. 1a: eine perspektivische Ansicht eines zum erfindungsgemäßen Bedienelement 1 gehörigen Rahmens 3;
- Fig. 1b: eine perspektivische Ansicht einer zum erfindungsgemäßen Bedienelement 1 gehörigen, haubenförmigen Blende 2;
- Fig. 1c: eine perspektivische Ansicht einer zum erfindungsgemäßen Bedienelement 1 gehörigen, haubenförmigen Blende 2 und eines Rahmens 3, die stoffschlüssig verbunden sind;
- Fig. 2a: eine perspektivische Ansicht einer zum erfindungsgemäßen Bedienelement 1 gehörigen, haubenförmigen Blende 2 und eines Rahmens 3, die stoffschlüssig verbunden sind;
- Fig: 2b: eine perspektivische Ansicht eines zum erfindungsgemäßen Bedienelement 1 gehörigen Trägers 4;
- Fig. 3c: eine perspektivische Ansicht eines erfindungsgemäßen Bedienelements 1 mit haubenförmiger Blende 2, Rahmen 3 und Träger 4, die stoffschlüssig verbunden sind:

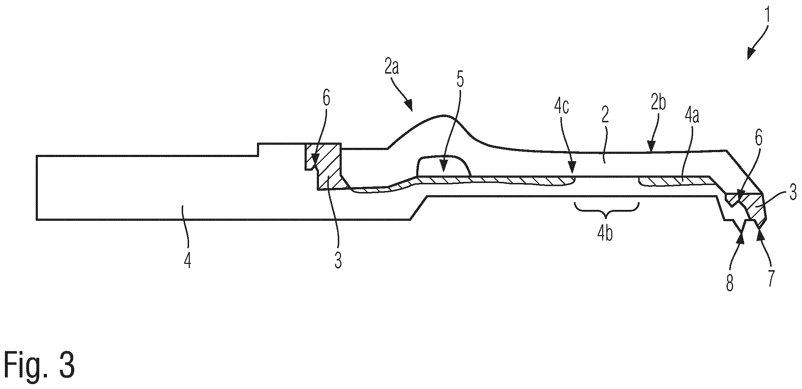

- Fig. 3: eine Schnittansicht des erfindungsgemäßen Bedienelements aus Fig. 3c;

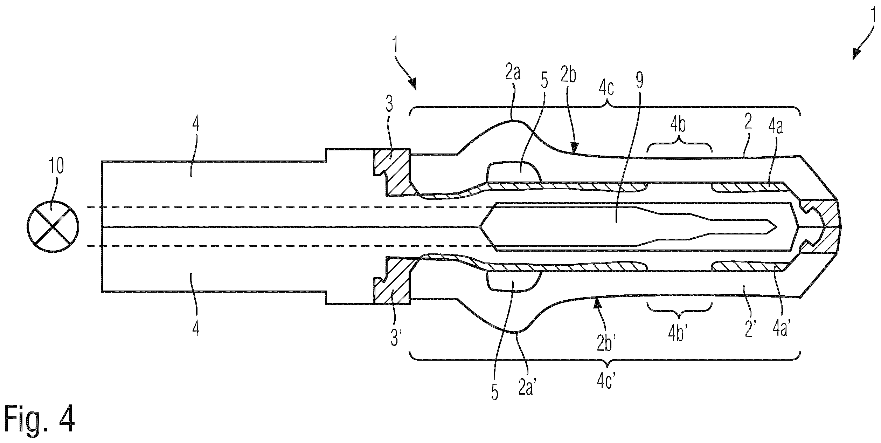

- Fig. 4: eine Schnittansicht einer weiteren Ausführungsform des erfindungsgemäßen Bedienelements 1.

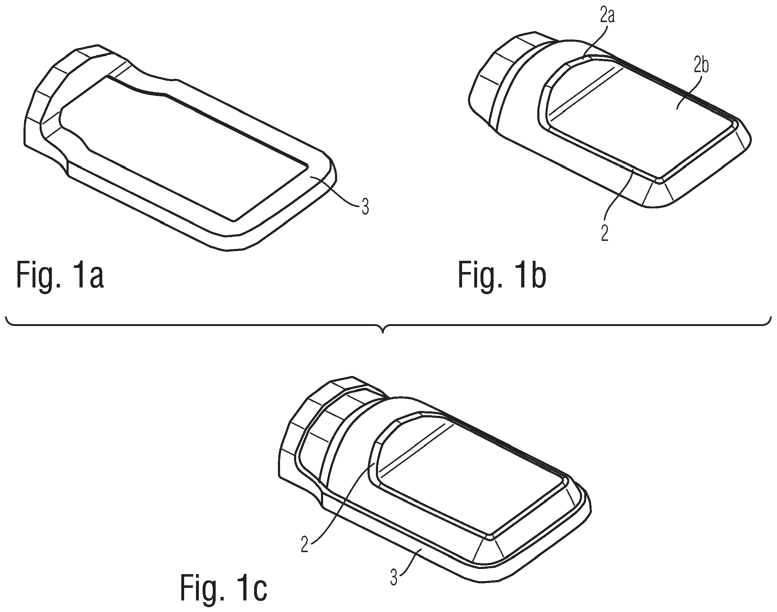

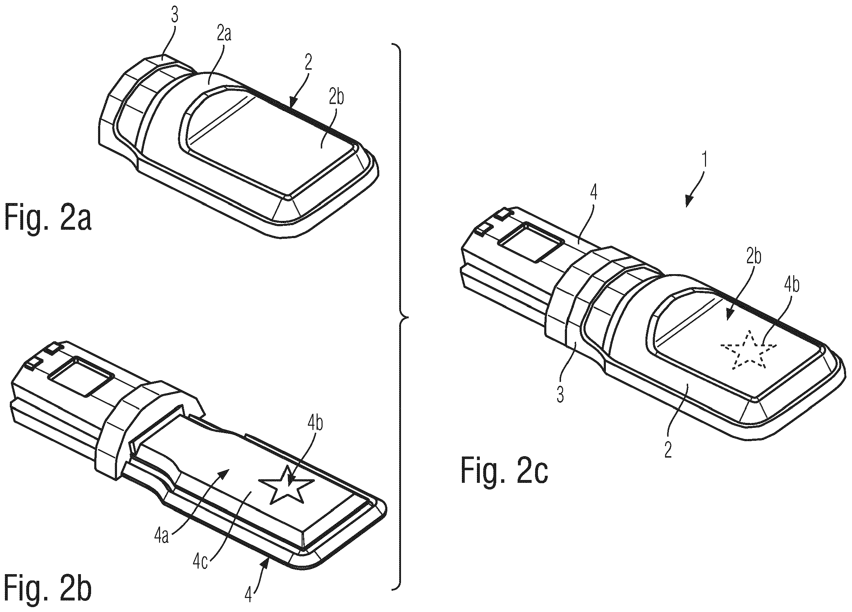

Anhand der Figuren 1a bis 3c wird im Wesentlichen das erfindungsgemäße Verfahren erläutert. In einem thermischen Formgebungsschritt des erfindungsgemäßen Verfahrens erfolgt ein thermisches Formen eines Rahmens 3 aus einem dritten opaken Thermoplast. Der Rahmen 3 zeichnet sich, wie in Figur 1a gezeigt, durch einen Rahmendurchbruch auf. In demselben oder einem weiteren thermischen Formgebungsschritt wird, wie in Figur 1b gezeigt, eine haubenförmige Blende 2 aus einem transparenten zweiten Thermoplast erzeugt. Die haubenförmige Blende 2 bildet eine äußere einen Bediener zugewandte Berührfläche 2b aus, die eine Aufwölbung 2a zur haptischen Orientierung bei der Berührung der Berührfläche 2b ausbildet. Die haubenförmige Blende 2 wird mit dem Rahmen 3 aus Figur 1a stoffschlüssig verbunden, um die in der Figur 1c gezeigte Kombination zu bilden, wobei die haubenförmige Blende 2 in dem Rahmen 3, insbesondere dessen Rahmendurchbruch aufgenommen ist. Die stoffschlüssige Verbindung erfolgt beispielsweise in einem separaten Fügeschritt, wie in einem Ultraschallverschweißschritt. Bevorzugt werden die vorgenannten Schritte in einem Mehrkomponenten-Spritzgießschritt zusammengeführt, indem beispielsweise die Schritte mittels eines zumindest gemeinsamen formgebenden Werkzeugs oder zumindest eines gemeinsamen formgebenden Werkzeugteils ausgeführt werden und die stoffschlüssige Verbindung zwischen dem Rahmen 3 und der haubenfömigen Blende 2 erreicht wird, wie sie nochmals in Figur 2a gezeigt ist.

In einem erfindungsgemäß vorgesehenen thermischen Formgebungsschritt erfolgt ein thermisches Formen eines Trägers 4 aus einem transluzenten oder transparenten ersten Thermoplast, wie er in Figur 2b gezeigt ist. In einem zeitgleichen, bevorzugt zeitlich nachgeschalteten Schritt erfolgt ein bereichsweises Beschichten einer Oberfläche des Trägers 4 mit einer opaken Schicht 4a, so dass ein transluzenter, unbeschichteter Teilbereich der Oberfläche und somit eine Leuchtfläche 4b bei Einkopplung von Licht in den Träger 4 verbleibt. Die opake Schicht 4a und die Leuchtfläche 4b bilden bei bestimmungsgemäßer Anbringung des Bedienelements 1 eine dem Betrachter zugewandte, gemeinsame Sichtfläche 4c aus. Die opake Schicht 4a ist beispielsweise eine Lackschicht, die in einem Druck- oder Sprühbeschichtungsverfahren auf die Oberfläche des Trägers 4 bereichsweise aufgebracht wird. Die Beschichtung kann auch großflächig oder vollflächig erfolgen, wobei in einem nachfolgenden Ablationsschritt die opake Schicht 4a zur Erzeugung der Leuchtfläche 4b entfernt wird, beispielsweise mittels Laserablation.

Nachfolgend erfolgt in einem Fügeschritt ein stoffschlüssiges Verbinden des Rahmens 3 mit dem Träger 4, so dass die haubenförmige Blende 2 die Sichtfläche 4c und damit die Leuchtfläche 4b übergreifend angeordnet ist und die Sichtfläche 4c und damit u.a. die Leuchtfläche 4b durch die haubenförmige Blende 2 sichtbar ist, während die haubenförmige Blende 2 auf ihrer, der Sichtfläche 4c abgewandten Seite eine äußere Berührfläche 2b ausbildet. Bevorzugt erfolgt das stoffschlüssige Verbinden des Rahmens 3 mit dem Träger 4 durch Ultraschallverschweißen, wodurch das in Figur 2c gezeigte Bedienelement erhalten wird. Durch die erfindungsgemäße Herstellung des Bedienelements wird erreicht, dass die haubenförmige Blende 2 ausschließlich über den Rahmen 3 am Träger 4 aufliegt. Aufgrund der beabstandeten Anordnung oder der lediglich im losen Berührkontakt stehenden relativen Anordnung von Träger 4 und haubenförmiger Blende 2 kommt es nicht zu einer Beeinträchtigung der Sichtfläche 4c und insbesondere nicht der opaken Schicht 4a. Optisch nachteilige Ablöseerscheinungen bei transparent überspritzten Sichtflächen, wie aus dem Stand der Technik bekannt, sind nicht zu beobachten. Darüber hinaus kann die gestalterische Auslegung der haubenförmige Blende 2 nahezu beliebig ausfallen, da Schrumpfungsprozesse durch Abkühlprozesse sich nicht auf eine ansonsten vorgesehene Verbindung der hauebenförmigen Blende 2 zum Träger 4 auswirken. Dadurch wird der gestalterische Freiheitsgrad erhöht und insbesondere die Möglichkeit geschaffen, eine einen Glaswerkstoff imitierende Gestaltung der haubenförmigen Blende 2 zu wählen, die sich insbesondere durch eine vergleichsweise hohe Materialstärke und/oder Oberflächenkonturen mit in geradlinigen Kanten auszeichnen. Hier weist daher nach dem stoffschlüssigen Verbinden des Rahmens 3 mit dem Träger 4 die haubenförmige Blende 2 zumindest in ihrem Bereich über der Sichtfläche 4c eine Dicke von mindestens 1,5 mm auf.

Wie der Schnittdarstellung der Figur 3 zeigt, ist die haubenförmige Blende 2 derart ausgebildet, dass zwischen der haubenförmigen Blende 3 und der opaken Schicht 4a entweder ein Luftspalt oder allenfalls ein Berührkontakt ist, um dauerhaft eine Beschädigung der opaken Schicht 4a auszuschließen.

Die haubenförmige Blende 2 übergreift im Bereich der Aufwölbung 2a der Berührfläche 2b einen Hohlraum 5, der zwischen der haubenförmigen Blende 2 und der Sichtfläche 4c angeordnet ist. Um das Austreten von Streulicht zu unterbinden, ist vorgesehen, dass der Bereich, in dem der Rahmen 3 mit dem Träger 4 stoffschlüssig verbunden ist, die Sichtfläche 4c vollständig umschließt. Dies wird bei Ultraschallverschweißen des Trägers 4 mit dem Rahmen 3 dadurch erreicht, dass eine umlaufende, in Richtung des Rahmens 3 weisende Erhebung 6 am Träger 4 vorgesehen ist, die als Energierichtungsgeber beim Ultraschallverschweißen dient.

In einer weiteren Ausgestaltung ist der Träger 4 mehrteilig ausgebildet ist und es ist ferner in dem Träger 4 ein Lichtleiter 9 aufgenommen, um Licht einer Lichtquelle 10 in den Träger 4 einzukoppeln, wie es beispielsweise in Figur 4 gezeigt ist.

Bei dieser Ausführungsform weist das Bedienelement 1 eine weitere opake Schicht 4a' auf, die bereichsweise auf einer weiteren Oberfläche des Trägers 4 aufgebracht ist, um durch einen transluzenten, bevorzugt unbeschichteten, Teilbereich der weiteren Oberfläche eine weitere Leuchtfläche 4b' bei Einkopplung von Licht in den Träger 4 vorzugeben. Dabei geben die weitere opake Schicht 4a' und die weitere Leuchtfläche 4b' bei bestimmungsgemäßer Anbringung des Trägers 4 eine dem Betrachter zugewandte, weitere Sichtfläche 4c' vor. Ferner ist eine die weitere Sichtfläche übergreifende, weitere haubenförmige Blende 2' aus einem transparenten Material vorgesehen, die so angeordnet ist, dass die weitere Sichtfläche 4c' durch die weitere haubenförmige Blende 2b' für den Betrachter sichtbar ist. Ein weiterer, stoffschlüssig mit der weiteren haubenförmigen Blende 2' verbundener Rahmen 3' aus einem weiteren dritten Thermoplast ist ferner am Träger 4 stoffschlüssig festgelegt, hier durch Ultraschallverschweißen. Dabei sind die Rahmen 3, 3' untereinander durch Ultraschallverschweißen stoffschlüssig verbunden, hier über eine gesamte Länge ihres gemeinsamen Berührkontaktbereichs stoffschlüssig verbunden. Dazu sind die längliche, aus der Figur 3 ersichtliche Erhebung 7 an dem Rahmen 3 als auch die ferner aus Figur 3 ersichtliche längliche Erhebung 8 an einer der Komponenten des Trägers 4 vorgesehen, die jeweils als Energierichtungsgeber beim Ultraschalverschweißen dienen. Bezüglich des Verfahrens zur Herstellung der weiteren haubenförmigen Blende 2' und des weiteren Rahmens 3' aber bezüglich der Erzeugung der weiteren Sichtfläche 4c' auf dem Träger 4 oder dessen weiteren Komponenten wird auf die obigen Ausführungen verwiesen.

## Patentansprüche

1. Verfahren zur Herstellung eines Bedienelements (1) mit den folgenden Schritten:
thermisches Formen eines Trägers (4) aus einem transluzenten oder transparenten ersten Thermoplast;
Beschichten einer Oberfläche des Trägers (4) mit einer opaken Schicht (4a), bevorzugt opaken Lackschicht, so dass ein transluzenter, bevorzugt unbeschichteter, Teilbereich der Oberfläche eine Leuchtfläche (4b) bei Einkopplung von Licht in den Träger (4) vorgibt, und die opake Schicht (4a) und die Leuchtfläche (4b) bei bestimmungsgemäßer Anbringung des Bedienelements (1) eine dem Betrachter zugewandte, gemeinsame Sichtfläche (4c) vorgeben;
thermisches Formen einer haubenförmigen Blende (2) aus einem transparenten zweiten Thermoplast;
thermisches Formen eines Rahmens (3) aus einem opaken dritten Thermoplast;
stoffschlüssiges Verbinden der haubenförmigen Blende (2) mit dem Rahmen (3), so dass die haubenförmige Blende (2) in dem Rahmen (3) aufgenommen ist;
stoffschlüssiges Verbinden des Rahmens (3) mit dem Träger (4), so dass die haubenförmige Blende (2) die Sichtfläche (4c) übergreifend angeordnet ist und die Sichtfläche (4c) durch die haubenförmige Blende (2) sichtbar ist und auf ihrer, der Sichtfläche (4c) abgewandten Seite eine äußere Berührfläche (2b) ausbildet.

2. Verfahren gemäß dem vorhergehenden Anspruch, wobei durch Mehrkomponenten-Spritzgießen das thermische Formen der haubenförmigen Blende (2) und das thermische Formen des Rahmens (3) und das stoffschlüssige Verbinden der haubenförmigen Blende (2) mit dem Rahmen (3) durchgeführt werden.

3. Verfahren gemäß einem der vorhergehenden Ansprüche, wobei durch Ultraschallschweißen zumindest das stoffschlüssige Verbinden des Rahmens (3) mit dem Träger (4) erfolgt.

4. Verfahren gemäß dem vorhergehenden Anspruch, wobei der Rahmen (3) und/oder der Träger (4) vor deren wechselseitiger stoffschlüssiger Verbindung eine umlaufende, im dem jeweils für den gemeinsamen Berührkontakt vorgesehenen Bereich angeordnete Erhebung (6) als Energierichtungsgeber für das Ultraschallverschweißen aufweisen.

5. Verfahren gemäß einem der vorhergehenden Ansprüche, wobei nach dem stoffschlüssigen Verbinden des Rahmens (3) mit dem Träger (4) zwischen der haubenförmigen Blende (2) und der opaken Schicht (4a) ein Luftspalt angeordnet ist.

6. Verfahren gemäß einem der vorhergehenden Ansprüche, wobei nach dem stoffschlüssigen Verbinden des Rahmens (3) mit dem Träger (4) die haubenförmige Blende (2) zumindest über der Sichtfläche (4c) ein Dicke von mindestens 1,5 mm aufweist.

7. Verfahren gemäß einem der vorhergehenden Ansprüche, wobei nach dem Formen des Rahmens (3) der Rahmen (3) eine Materialstärke aufweist, die 3,0 mm, bevorzugt 2,0 mm nicht überschreitet.

8. Verfahren gemäß einem der vorhergehenden Ansprüche, wobei nach dem Formen die haubenförmige Blende (2) eine haptisch merkbare Aufwölbung (2b) der Berührfläche (2b) ausbildet und nach dem stoffschlüssigen Verbinden des Rahmens (3) mit dem Träger (4) die Aufwölbung (2b) einen Hohlraum (5) übergreift, der zwischen der haubenförmigen Blende (2) und der Sichtfläche (4c) angeordnet ist.

9. Verfahren gemäß einem der vorhergehenden Ansprüche, wobei der Träger (4) mehrteilig ausgebildet ist und in dem Träger (4) ein Lichtleiter (9) aufgenommen wird, um Licht einer Lichtquelle (10) in den Träger (4) einzukoppeln.

10. Verfahren gemäß einem der vorhergehenden Ansprüche, mit den folgenden Schritten:
bereichsweises Beschichten einer weiteren Oberfläche des Trägers (4) mit einer weiteren opaken Schicht (4a'), so dass ein transluzenter,
bevorzugt unbeschichteter, Teilbereich der weiteren Oberfläche eine weitere Leuchtfläche (4b') bei Einkopplung von Licht in den Träger (4) vorgibt, und die weitere opake Schicht (4a') und die weitere Leuchtfläche (4b') bei bestimmungsgemäßer Anbringung des Bedienelements eine dem Betrachter zugewandte, weitere gemeinsame Sichtfläche (4c') vorgeben;
thermisches Formen einer weiteren haubenförmigen Blende (2') aus einem weiteren transparenten zweiten Thermoplast;
thermisches Formen eines weiteren Rahmens (3') aus einem weiteren opaken dritten Thermoplast;
stoffschlüssiges Verbinden der weiteren haubenförmigen Blende (2') mit dem weiteren Rahmen (3'), so dass die weitere haubenförmige Blende (2') in dem weiteren Rahmen (3') aufgenommen ist;
stoffschlüssiges Verbinden des weiteren Rahmens (3') mit dem Träger (4), so dass die weitere haubenförmige Blende (2') die weitere Sichtfläche (4c') übergreifend angeordnet ist und die weitere Sichtfläche (4c') durch die weitere haubenförmige Blende (2') hindurch sichtbar ist und auf ihrer, der weiteren Sichtfläche (4c') abgewandten Seite eine weitere äußere Berührfläche (2b') ausbildet.

11. Verfahren gemäß dem vorhergehenden Anspruch, ferner aufweisend den Schritt des stoffschlüssigen Verbindens des Rahmens (3) mit dem weiteren Rahmen (3'), bevorzugt über eine gesamte Länge ihres gemeinsamen Berührkontaktbereichs.

12. Bedienelement (1), aufweisend:
einen Träger (4) aus einem transluzenten oder transparenten ersten Thermoplast;
eine opake Schicht (4a), bevorzugt opake Lackschicht, die bereichsweise auf einer Oberfläche des Trägers (4) aufgebracht ist, um durch einen transluzenten, bevorzugt unbeschichteten, Teilbereich der Oberfläche eine Leuchtfläche (4b) bei Einkopplung von Licht in den Träger (4) vorzugeben; wobei die opake Schicht (4a) und die Leuchtfläche (4b) bei bestimmungsgemäßer Anbringung des Bedienelements (1) eine dem Betrachter zugewandte, gemeinsame Sichtfläche (4c) vorgeben; eine die Sichtfläche (4c) übergreifende, haubenförmige Blende (2) aus einem transparenten zweiten Thermoplast, so dass die Sichtfläche (4c) durch die Blende (2) sichtbar ist und auf ihrer der Sichtfläche (4c) abgewandten Seite eine äußere Berührfläche (2b) ausbildet;
ein stoffschlüssig mit der haubenförmigen Blende (2) verbundener, die haubenförmige Blende (2) aufnehmender Rahmen (3) aus einem opaken dritten Thermoplast; wobei der Rahmen (3) am Träger (4) stoffschlüssig festgelegt ist.

13. Bedienelement (1) gemäß dem vorhergehenden Anspruch, wobei zwischen der haubenförmigen Blende (2) und der opaken Schicht (4a) ein Luftspalt angeordnet ist.

14. Bedienelement (1) gemäß einem der beiden vorhergehenden Ansprüche, wobei die haubenförmige Blende (2) zumindest über der Sichtfläche (4c) ein Dicke von mindestens 1,5 mm aufweist.

15. Bedienelement (1) gemäß einem der vorhergehenden Ansprüche 12 bis 14, wobei der Rahmen (3) eine Materialstärke aufweist, die 3,0 mm, bevorzugt 2,0 mm nicht überschreitet.

16. Bedienelement (1) gemäß einem der vorhergehenden Ansprüche 12 bis 15, wobei die haubenförmige Blende (2) eine haptisch merkbare Aufwölbung (2a) der Berührfläche (2b) ausbildet, wobei die Aufwölbung (2b) einen Hohlraum (5) übergreift, der zwischen der haubenförmigen Blende (2) und der Sichtfläche (4c) angeordnet ist.

17. Bedienelement (1) gemäß einem der vorhergehenden Ansprüche 12 bis 16, wobei der Bereich, in dem der Rahmen (3) mit dem Träger (4) stoffschlüssig verbunden ist, die Sichtfläche (4c) vollständig umschließt.

18. Bedienelement (1) gemäß einem der vorhergehenden Ansprüche 12 bis 17, wobei das Bedienelement (1) einen mehrteiligen Träger (4) und einen in dem Träger (4) aufgenommenen Lichtleiter (9) aufweist, um Licht einer Lichtquelle (10) in den Träger (4) einzukoppeln.

19. Bedienelement (1) gemäß einem der vorhergehenden Ansprüche 12 bis 18, aufweisend: eine weitere opake Schicht (4a'), die bereichsweise auf einer weiteren Oberfläche des Trägers (4) aufgebracht ist, um durch einen transluzenten, bevorzugt unbeschichteten, Teilbereich der weiteren Oberfläche eine weitere Leuchtfläche (4b') bei Einkopplung von Licht in den Träger (4) vorzugeben; wobei die weitere opake Schicht (4a') und die weitere Leuchtfläche (4b') bei bestimmungsgemäßer Anbringung des Trägers (4) eine dem Betrachter zugewandte, weitere Sichtfläche (4c') vorgeben; eine die weitere Sichtfläche (4c') übergreifende, weitere haubenförmige Blende (2') aus einem transparenten Material, die so angeordnet ist, dass die weitere Sichtfläche (4c') durch die weitere Blende (2') für den Betrachter sichtbar ist; ein weiterer, stoffschlüssig mit der weiteren haubenförmigen Blende (2') verbundener Rahmen (3') aus einem weiteren dritten Thermoplast; wobei der weitere Rahmen (3') am Träger (4') stoffschlüssig festgelegt ist.

20. Bedienelement (1) gemäß dem vorhergehenden Anspruch, wobei der Rahmen (3) und der weitere Rahmen (3') stoffschlüssig verbunden sind, bevorzugt über eine gesamte Länge ihres gemeinsamen Berührkontaktbereichs stoffschlüssig verbunden sind.

21. Verwendung des Bedienelements (1) gemäß einem der vorhergehenden Ansprüche 12 bis 20 in einem Kraftfahrzeug.
